# EUROPEAN PATENT SPECIFICATION

(11) **EP 4 420 463 B1**
(45) Date of publication and mention of the grant of the patent: **15.07.2026**
(21) Application number: 21960827.0
(22) Date of filing: 18.10.2021
(51) Int. Cl.: H04W 74/0808, H04W 16/14, H04W 74/00

(54) **CHANNEL OCCUPANCY TIME SHARING FOR SIDELINK**
KANALBELEGUNGSZEITTEILUNG FÜR SIDELINK
PARTAGE DE TEMPS D'OCCUPATION DE CANAL POUR LIAISON LATÉRALE

(43) Date of publication of application: 28.08.2024
(73) Proprietor: QUALCOMM INCORPORATED, San Diego, California 92121-1714 (US)
(72) Inventor: CHEN, Siyi, San Diego, California 92121-1714 (US); YANG, Luanxia, San Diego, California 92121-1714 (US); XU, Changlong, San Diego, California 92121-1714 (US); ZHANG, Xiaoxia, San Diego, California 92121-1714 (US); SUN, Jing, San Diego, California 92121-1714 (US); PRAKASH, Rajat, San Diego, California 92121-1714 (US); XU, Hao, San Diego, California 92121-1714 (US)
(74) Representative: Tomkins & Co
(86) International application number: PCT/CN2021/124336
(87) International publication number: WO 2023/065065

(56) References cited:
- WO-A1-2020/162804
- WO-A1-2020/164439
- WO-A1-2020/164439
- CN-A- 110 784 874
- US-A1- 2021 092 783
- US-A1- 2021 195 637
- LENOVO, MOTOROLA MOBILITY: "New WID on CA enhancement in Rel-18", 3GPP DRAFT; RP-212057, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG RAN, no. Electronic Meeting; 20210913 - 20210917, 6 September 2021 (2021-09-06), Mobile Competence Centre ; 650, route des Lucioles ; F-06921 Sophia-Antipolis Cedex ; France, XP052049345
- INTEL CORPORATION: "Channel access mechanism for NR-unlicensed", 3GPP DRAFT; R1-1906785- INTEL -CHANNEL ACCESS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, Nevada, USA; 20190513 - 20190517, 4 May 2019 (2019-05-04), Mobile Competence Centre ; 650, route des Lucioles ; F-06921 Sophia-Antipolis Cedex ; France , XP051708821
- INTEL CORPORATION: "Enhancements to configured grants for NR-unlicensed", 3GPP DRAFT; R1-1910643 - INTEL - CONFIGURED GRANT FOR NR-U, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Chongqing, China; 20191014 - 20191020, 8 October 2019 (2019-10-08), Mobile Competence Centre ; 650, route des Lucioles ; F-06921 Sophia-Antipolis Cedex ; France , XP051789435

## Description

### INTRODUCTION

Aspects of the present disclosure relate to wireless communications, and more particularly, to techniques for channel occupancy time (COT) sharing for sidelink.

Wireless communication systems are widely deployed to provide various telecommunication services such as telephony, video, data, messaging, broadcasts, or other similar types of services. These wireless communication systems may employ multiple-access technologies capable of supporting communication with multiple users by sharing available system resources with those users (e.g., bandwidth, transmit power, or other resources). Multiple-access technologies can rely on any of code division, time division, frequency division orthogonal frequency division, single-carrier frequency division, or time division synchronous code division, to name a few. These and other multiple access technologies have been adopted in various telecommunication standards to provide a common protocol that enables different wireless devices to communicate on a municipal, national, regional, and even global level.

Although wireless communication systems have made great technological advancements over many years, challenges still exist. For example, complex and dynamic environments can still attenuate or block signals between wireless transmitters and wireless receivers, undermining various established wireless channel measuring and reporting mechanisms, which are used to manage and optimize the use of finite wireless channel resources. Consequently, there exists a need for further improvements in wireless communications systems to overcome various challenges.

WO 2020/164439 discloses a user equipment which comprises a processing circuit, the processing circuit being configured to: receive resource request information from a plurality of other user equipments and generate channel occupancy time (COT) sharing indication information, wherein the COT sharing indication information comprises time frequency resources used by other user equipments when the user equipment shares a COT with the other user equipments; and send the COT sharing indication information to the other user equipments.

### SUMMARY

Some aspects described herein relate to a method of wireless communication performed by a first user equipment (UE). The method may include transmitting, to a second UE, a first channel occupancy time (COT) sharing request. The method may include transmitting, to a third UE, after a time window has elapsed, a second COT sharing request, wherein the second COT sharing request is transmitted based at least in part on the first UE having received no response to the first COT sharing request within the time window or the first UE having received a negative response to the first COT sharing request within the time window.

Some aspects described herein relate to a method of wireless communication performed by a first UE. The method may include transmitting, to a second UE of a group of UEs using groupcast signaling, a first COT sharing request indicating a first time offset associated with a listen-before-transmit attempt of the second UE. The method may include transmitting, to a third UE of the group of UEs using groupcast signaling, a second COT sharing request indicating a second time offset associated with a listen-before-transmit attempt of the second UE.

Other aspects provide: an apparatus operable, configured, or otherwise adapted to perform the aforementioned methods as well as those described elsewhere herein; a non-transitory, computer-readable media comprising instructions that, when executed by one or more processors of an apparatus, cause the apparatus to perform the aforementioned methods as well as those described elsewhere herein; a computer program product embodied on a computer-readable storage medium comprising code for performing the aforementioned methods as well as those described elsewhere herein; and an apparatus comprising means for performing the aforementioned methods as well as those described elsewhere herein. By way of example, an apparatus may comprise a processing system, a device with a processing system, or processing systems cooperating over one or more networks.

The following description and the appended figures set forth certain features for purposes of illustration.

### BRIEF DESCRIPTION OF THE DRAWINGS

The appended figures depict certain features of the various aspects described herein and are not to be considered limiting of the scope of this disclosure.
**FIG. 1** is a block diagram illustrating an example wireless communication network.
**FIG. 2** is a block diagram illustrating aspects of an example of a base station and user equipment.
**FIGS. 3A-3D** depict various example aspects of data structures for a wireless communication network.
**FIG. 4** is a diagram illustrating an example of signaling associated with requesting channel occupancy time (COT) sharing based at least in part on a time window
**FIG. 5** is a diagram illustrating an example of signaling associated with performing listen-before-transmit (LBT) based at least in part on a time window.
**FIG. 6** is a diagram illustrating an example of signaling associated with requesting COT sharing based at least in part on a time offset and groupcast signaling.
**FIG. 7** is a diagram illustrating an example of an implementation of a time offset.
**FIG. 8** is a diagram illustrating an example of another implementation of a time offset.
**FIGS. 9-12** are diagrams illustrating example processes performed, for example, by a user equipment (UE).
**FIG. 13** depicts aspects of an example communications device.
**FIG. 14** depicts aspects of an example communications device.

### DETAILED DESCRIPTION

Aspects of the present disclosure provide apparatuses, methods, processing systems, and computer-readable mediums for COT sharing for sidelink.

Some bands of the wireless spectrum may be unlicensed, meaning that the bands may not be licensed to particular users. Generally, unlicensed spectrum is not associated with a central scheduler such as a gNB. Therefore, wireless nodes operating in unlicensed spectrum may coordinate channel access with one another. A wireless node, such as a user equipment (UE), may perform a listen-before-transmit or listen-before-talk (LBT) operation (sometimes referred to as a clear channel assessment) to gain access to an unlicensed channel. When the LBT operation is successful, the UE may gain access to the unlicensed channel for a length of time referred to as a channel occupancy time (COT). During the COT, the UE can perform transmissions without performing additional LBT operations. The duration of the COT may be dependent on the type of LBT operation and LBT parameters used for the LBT operation.

Some UEs may have difficulty acquiring a COT. For example, if several UEs are placed in close proximity to one another, the several UEs may experience a high level of interference, thus leading to a low probability of successful channel access. A low probability of successful channel access may lead to link starvation at one or more of the several UEs. A UE may request COT sharing, in which a COT of a first UE can be shared with a COT of a second UE. For example, the first UE may have a higher probability of successful channel access than the second UE. Once the first UE has secured the channel (meaning that other UEs will not utilize the channel during the COT), the second UE can also transmit during the COT, thereby improving channel access of the second UE. COT sharing requests can be transmitted via sidelink control information, sidelink radio resource control (RRC) signaling, or the like. However, if the second UE transmits the COT sharing request to a single first UE, then the single first UE may be a point of failure for the second UE's channel access. For example, if the single first UE fails to secure the channel, then the second UE may not have access to a COT, which reduces throughput and increases latency. In some examples, the first UE may continue to perform LBT attempts until the channel is secured, which may introduce significant and unpredictable delay.

Some techniques and apparatuses described herein provide for COT sharing in a fashion that facilitates the requesting of COT sharing from multiple different UEs, such that there is not a single UE that can cause a failure to access the channel for an extended period of time. In some aspects, the COT sharing request is transmitted to one UE at a time (such as via unicast signaling) with a limited waiting time (referred to herein as a time window) until the COT sharing request is transmitted to another UE. In some other aspects, the COT sharing request is transmitted to multiple UEs, such as via groupcast signaling. Some techniques and apparatuses described herein provide time offsets for COT sharing requests transmitted to multiple UEs, such that the requesting UE does not receive multiple concurrent COT sharing indications.

In this way, the occurrence of failure of COT sharing is reduced. By reducing the occurrence of COT sharing failure, throughput may be increased, latency may be reduced, and coverage for UEs operating in unlicensed spectrum may be improved.

### Introduction to Wireless Communication Networks

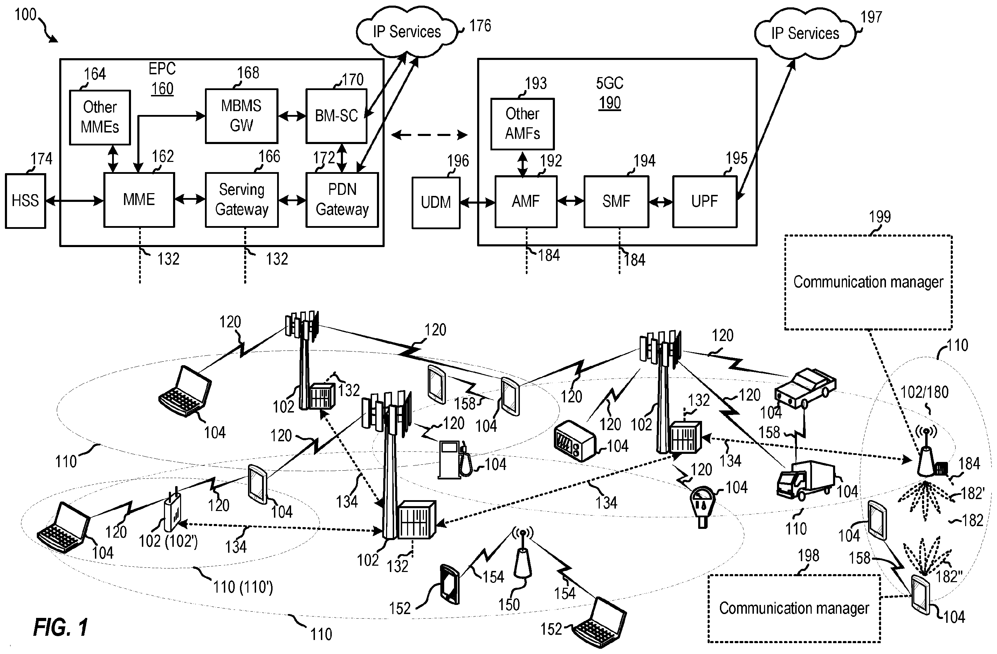

**FIG. 1** depicts an example of a wireless communications network 100, in which aspects described herein may be implemented.

Generally, wireless communications network 100 includes base stations (BSs) 102, UEs 104, one or more core networks, such as an Evolved Packet Core (EPC) 160 and 5G Core (5GC) network 190, which interoperate to provide wireless communications services.

Base stations 102 may provide an access point to the EPC 160 and/or 5GC 190 for a user equipment 104, and may perform one or more of the following functions: transfer of user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, radio access network (RAN) sharing, multimedia broadcast multicast service (MBMS), subscriber and equipment trace, RAN information management (RIM), paging, positioning, delivery of warning messages, among other functions. Base stations may include and/or be referred to as a gNB, NodeB, eNB, ng-eNB (e.g., an eNB that has been enhanced to provide connection to both EPC 160 and 5GC 190), an access point, a base transceiver station, a radio base station, a radio transceiver, or a transceiver function, or a transmission reception point in various contexts.

Base stations 102 wirelessly communicate with UEs 104 via communications links 120. Each of base stations 102 may provide communication coverage for a respective geographic coverage area 110, which may overlap in some cases. For example, small cell 102' (e.g., a low-power base station) may have a coverage area 110' that overlaps the coverage area 110 of one or more macrocells (e.g., high-power base stations).

The communication links 120 between base stations 102 and UEs 104 may include uplink (UL) (also referred to as reverse link) transmissions from a user equipment 104 to a base station 102 and/or downlink (DL) (also referred to as forward link) transmissions from a base station 102 to a user equipment 104. The communication links 120 may use multiple-input and multiple-output (MIMO) antenna technology, including spatial multiplexing, beamforming, and/or transmit diversity in various aspects.

Examples of UEs 104 include a cellular phone, a smart phone, a session initiation protocol (SIP) phone, a laptop, a personal digital assistant (PDA), a satellite radio, a global positioning system, a multimedia device, a video device, a digital audio player, a camera, a game console, a tablet, a smart device, a wearable device, a vehicle, an electric meter, a gas pump, a large or small kitchen appliance, a healthcare device, an implant, a sensor/actuator, a display, or other similar devices. Some of UEs 104 may be internet of things (IoT) devices (e.g., parking meter, gas pump, toaster, vehicles, heart monitor, or other IoT devices), always on (AON) devices, or edge processing devices. UEs 104 may also be referred to more generally as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, or a client.

Communications using higher frequency bands may have higher path loss and a shorter range compared to lower frequency communications. Accordingly, certain base stations (e.g., 180 in **FIG. 1****)** may utilize beamforming 182 with a UE 104 to improve path loss and range. For example, base station 180 and the UE 104 may each include a plurality of antennas, such as antenna elements, antenna panels, and/or antenna arrays to facilitate the beamforming.

In some cases, base station 180 may transmit a beamformed signal to UE 104 in one or more transmit directions 182'. UE 104 may receive the beamformed signal from the base station 180 in one or more receive directions 182". UE 104 may also transmit a beamformed signal to the base station 180 in one or more transmit directions 182". Base station 180 may also receive the beamformed signal from UE 104 in one or more receive directions 182'. Base station 180 and UE 104 may then perform beam training to determine the best receive and transmit directions for each of base station 180 and UE 104. Notably, the transmit and receive directions for base station 180 may or may not be the same. Similarly, the transmit and receive directions for UE 104 may or may not be the same.

Wireless communication network 100 includes communication manager 199, which may be configured to configure UEs for COT sharing.

Wireless commmunication network 100 further includes communication manager 198, which may be used configured to perform signaling associated with requesting COT sharing from multiple UEs.

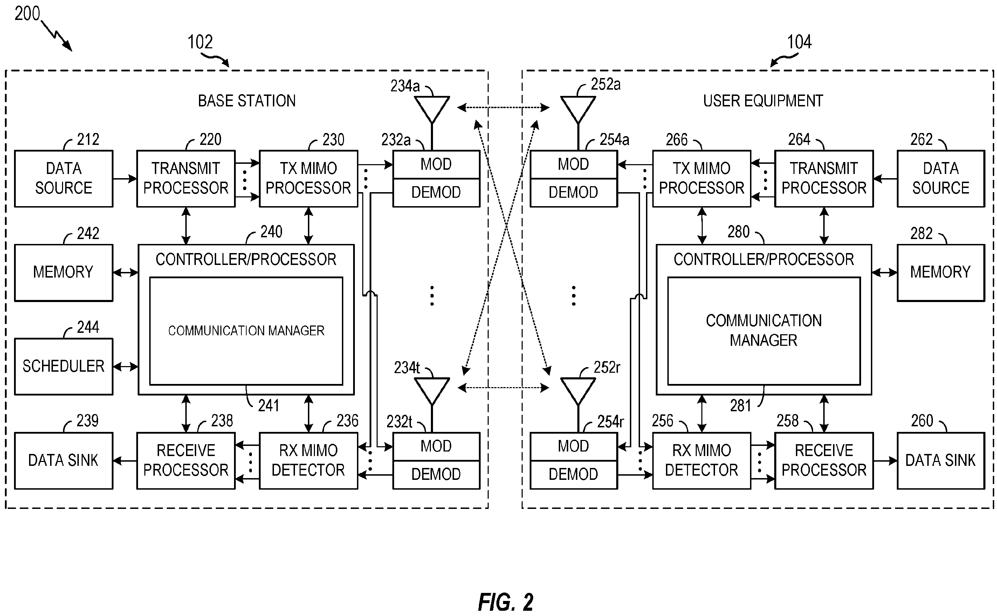

**FIG. 2** depicts aspects of an example BS 102 and a UE 104.

Generally, base station 102 includes various processors (e.g., 220, 230, 238, and 240), antennas 234a-t (collectively 234), transceivers 232a-t (collectively 232), which include modulators and demodulators, and other aspects, which enable wireless transmission of data (e.g., data source 212) and wireless reception of data (e.g., data sink 239). For example, base station 102 may send and receive data between itself and user equipment 104.

Base station 102 includes controller / processor 240, which may be configured to implement various functions related to wireless communications. In the depicted example, controller / processor 240 includes communication manager 241, which may be representative of communication manager 199 of **FIG. 1****.** Notably, while depicted as an aspect of controller / processor 240, communication manager 241 may be implemented additionally or alternatively in various other aspects of base station 102 in other implementations.

Generally, user equipment 104 includes various processors (e.g., 258, 264, 266, and 280), antennas 252a-r (collectively 252), transceivers 254a-r (collectively 254), which include modulators and demodulators, and other aspects, which enable wireless transmission of data (e.g., data source 262) and wireless reception of data (e.g., data sink 260).

User equipment 104 includes controller / processor 280, which may be configured to implement various functions related to wireless communications. In the depicted example, controller / processor 280 includes communication manager 281, which may be representative of communication manager 198 of **FIG. 1****.** Notably, while depicted as an aspect of controller / processor 280, communication manager 281 may be implemented additionally or alternatively in various other aspects of user equipment 104 in other implementations.

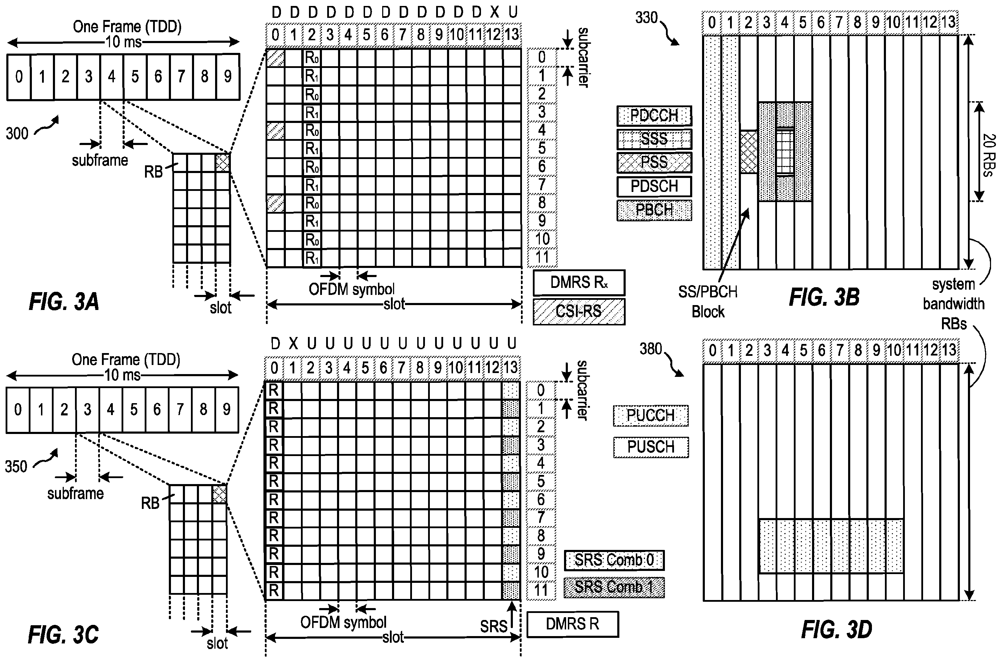

**FIGS. 3A-3D** depict aspects of data structures for a wireless communication network, such as wireless communication network 100 of **FIG. 1****.** In particular, **FIG. 3A** is a diagram 300 illustrating an example of a first subframe within a 5G (e.g., 5G NR) frame structure, **FIG. 3B** is a diagram 330 illustrating an example of DL channels within a 5G subframe, **FIG. 3C** is a diagram 350 illustrating an example of a second subframe within a 5G frame structure, and **FIG. 3D** is a diagram 380 illustrating an example of UL channels within a 5G subframe.

Further discussions regarding **FIG. 1****,** **FIG. 2****,** and **FIGS. 3A****-3D** are provided later in this disclosure.

### Aspects Related to Requesting Channel Occupancy Time Sharing from Multiple UEs

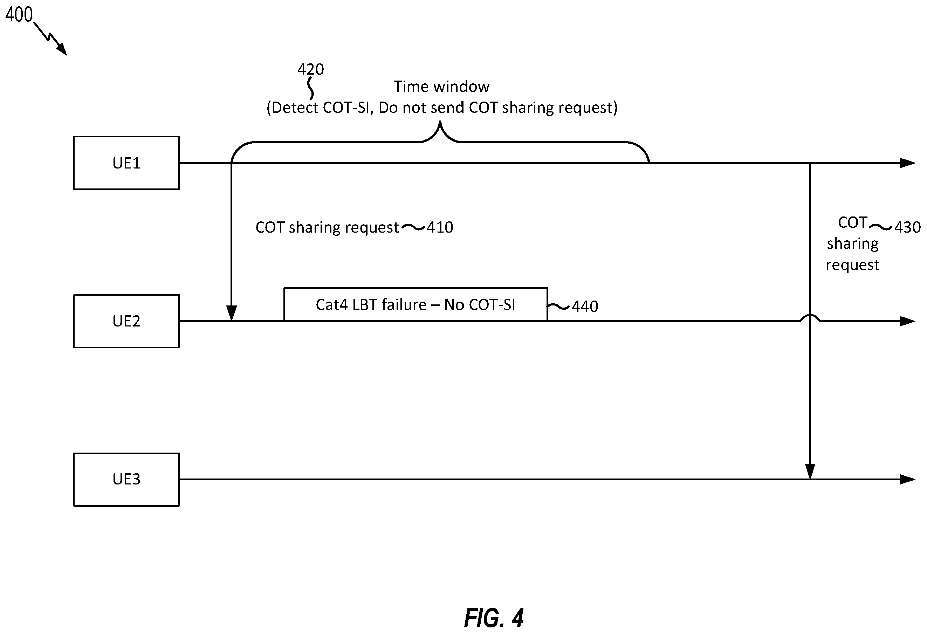

**FIG. 4** is a diagram illustrating an example 400 of signaling associated with requesting COT sharing based at least in part on a time window. Example 400 includes a first UE (shown as UE1, and which may be the UE 104), a second UE (shown as UE2, and which may be the UE 104), and a third UE (shown as UE3, and which may be the UE 104). In example 400, the first UE is a requesting UE (that requests COT sharing), and the second UE and the third UE may perform channel access based at least in part on a COT sharing request from the first UE.

As shown by reference number 410, the first UE may transmit, to the second UE, a COT sharing request. For example, the COT sharing request may be transmitted via unicast signaling. In some aspects, the COT sharing request may be transmitted via sidelink control information (SCI). In some other aspects, the COT sharing request may be transmitted via sidelink radio resource control (e.g., PC5-RRC) signaling. The COT sharing request may be associated with a time window, as described below. In some aspects, the time window may be indicated by the COT sharing request. In some other aspects, the first UE and/or the second UE may be pre-configured with the time window. In some aspects, the time window may be referred to as a monitoring window.

As shown by reference number 420, during the time window, the first UE may monitor for a COT structure indication (COT-SI). A COT-SI may indicate that a UE (e.g., the second UE or the third UE) has secured a COT. In some aspects, a COT-SI may indicate a COT duration, a COT end symbol, a slot format indication for one or more slots, a COT pause indication, or the like. A UE may transmit the COT-SI based at least in part on securing channel access for the duration of a COT. Furthermore, during the time window, the first UE may not transmit another COT sharing request. For example, the first UE may not transmit a COT sharing request to the third UE (as shown by reference number 430) until the time window associated with the COT sharing request to the second UE has elapsed.

As shown by reference number 440, in some aspects, the second UE may fail to secure channel access. For example, the second UE may perform an LBT operation, such as a Category 2 LBT operation (e.g., a one-shot LBT attempt) or a Category 4 LBT operation (e.g., an LBT attempt with random back-off and a variable contention window). Thus, after the time window has elapsed, the first UE may transmit a COT sharing request to the third UE (such as via unicast signaling), as shown by reference number 430. In some aspects, the first UE may receive a negative response from the second UE, such as indicating that the second UE failed the LBT attempt. In this example, the first UE may transmit the COT sharing request to the third UE (e.g., another candidate UE) based at least in part on receiving the negative response from the second UE. In some other aspects, the first UE may transmit the COT sharing request to the third UE based at least in part on not having received a COT-SI from the second UE within the time window.

In some aspects, SCI is transmitted in two stages. A first stage SCI (SCI-1) may be carried on a physical sidelink control channel (PSCCH). The SCI-1 may indicate a resource allocation, a modulation and coding scheme, and a priority of an associated physical sidelink shared channel (PSSCH). The SCI-1 may also indicate a resource reservation period, a time pattern and number of ports for a PSSCH demodulation reference signal (DMRS), and a size and format of second-stage SCI. The second stage SCI (SCI-2) is carried on the corresponding PSSCH. The SCI-2 may indicate a hybrid automatic repeat request (HARQ) process identifier, a new data indicator and redundancy version, a source identifier and destination identifier, a HARQ enabled/disabled indicator, a transmission type and channel state information (CSI) request (such as in certain SCI formats, such as SCI format 2-A), and/or the transmitting UE's zone identifier and required communication range (such as in certain SCI formats, such as SCI format 2-B).

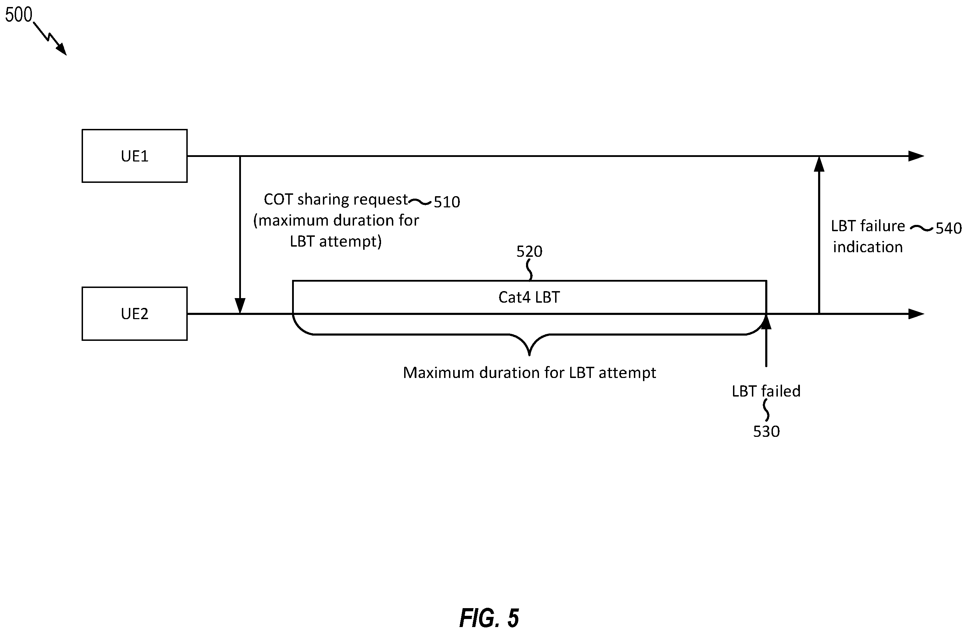

**FIG. 5** is a diagram illustrating an example 500 of signaling associated with performing LBT based at least in part on a time window. Example 500 includes a first UE (shown as UE1, and which may be the UE 104) and a second UE (shown as UE2, and which may be the UE 104). In example 500, the first UE is a requesting UE (that requests COT sharing), and the second UE may perform channel access based at least in part on a COT sharing request from the first UE.

In example 500, the time window may indicate a maximum duration for an LBT attempt of the second UE. In some aspects, the time window may indicate both a maximum duration for the LBT attempt, and the length of time for which the first UE monitors for a COT-SI (as described in connection with example 400). In some other aspects, the time window may indicate only the maximum duration for the LBT attempt of the second UE. For example, the time window may be the maximum duration. In some aspects, the time window (e.g., a time duration of the time window) may be indicated by sidelink RRC signaling. In some aspects, the time window may be indicated in the COT sharing request.

As shown by reference number 510, the first UE may transmit a COT sharing request to the second UE, as described in more detail in connection with **FIG. 4****.** As shown, the COT sharing request may be associated with a time window (which may be indicated by the COT sharing request or by other signaling).

As shown by reference number 520, the second UE may perform an LBT attempt in accordance with the time window. For example, the second UE may attempt, for the duration of time indicated by the time window, to access the medium. In some aspects, the second UE may perform Category 4 LBT, as described above. As shown by reference number 530, in example 500, the second UE's LBT attempt may fail. For example, the second UE may not gain channel access for the duration of the time window. Therefore, as shown by reference number 540, the second UE may transmit a negative response, shown as an LBT failure indication. The LBT failure indication may indicate that the second UE's LBT attempt failed.

In some aspects, the second UE may perform an LBT attempt to access the channel in order to transmit the LBT failure indication. For example, the second UE may perform a Category 2 LBT attempt, as described above. In some aspects, the second UE may perform a Category 4 LBT attempt with a modified parameter relative to the Category 4 LBT attempt performed in the time window. For example, the Category 4 LBT attempt for the negative response may be associated with a higher energy threshold, a smaller contention window size, or both, relative to the Category 4 LBT attempt performed in the time window. Thus, the likelihood of securing channel access for the negative response is improved relative to the time window.

In some aspects, the second UE may transmit the negative response via a base station. For example, if the second UE and the first UE are both in coverage of a base station, and if a radio access (e.g., Uu) link with the base station is in licensed band, the second UE may transmit the negative response to the base station (e.g., via a radio access link in a licensed band), and the base station may transmit the negative response to the first UE (e.g., via a radio access link in a licensed band). Thus, the second UE does not need to secure channel access for transmission of the negative response. In some aspects, the second UE may transmit the negative response via a cell, of a carrier aggregation configuration, that is associated with a licensed band. For example, if the first UE and the second UE have a first cell (e.g., a primary cell) associated with a licensed band and a second cell (e.g., a secondary cell) associated with an unlicensed band, the second UE may transmit the negative response on the first cell.

In some aspects, the second UE may transmit the negative response without sensing the channel. For example, the second UE may transmit the negative response via short control signaling. Thus, the second UE may eliminate the need to sense the channel or attain channel access, which reduces the likelihood of failure to transmit the negative response. Short control signaling transmissions are transmissions used by a UE to send management and control frames without sensing the channel for the presence of other signals. Within an observation period of 50ms, the number of short control signaling transmissions by the equipment may be constrained to be equal to or less than 50, and the total duration of the UE's short control signaling transmissions may be constrained to be less than 2500us within the observation period.

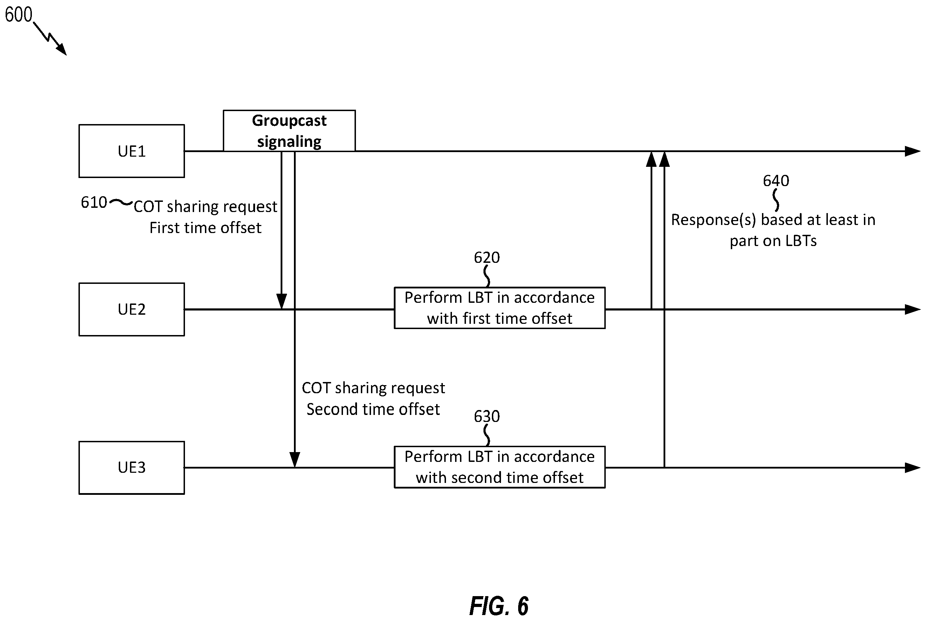

**FIG.** 6 is a diagram illustrating an example 600 of signaling associated with requesting COT sharing based at least in part on a time offset and groupcast signaling. Example 600 includes a first UE (shown as UE1, and which may be the UE 104), a second UE (shown as UE2, and which may be the UE 104), and a third UE (shown as UE3, and which may be the UE 104). In example 600, the first UE is a requesting UE (that requests COT sharing), and the second UE and the third UE may perform channel access based at least in part on a COT sharing request from the first UE.

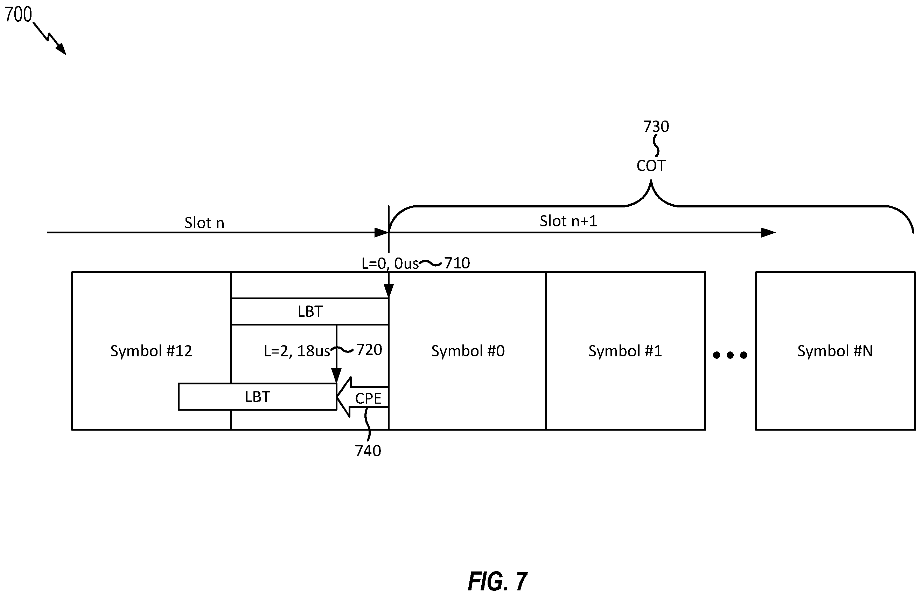

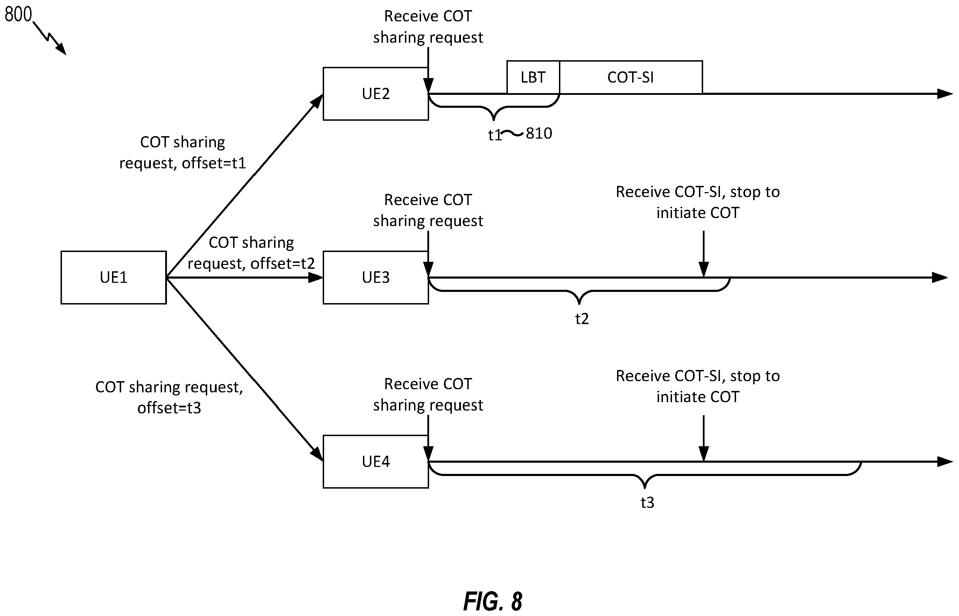

In example 600, example 700 of **FIG. 7****,** and example 800 of **FIG. 8****,** the first UE transmits the COT sharing request via groupcast signaling to the second UE and the third UE. For example, the first UE may transmit the COT sharing request to a group of UEs, including the second UE and the third UE, based at least in part on a group identifier associated with the group of UEs. If the second UE and the third UE were to concurrently perform LBT attempts, and if both of the LBT attempts finished at the same slot boundary (such that the second UE and the third UE transmit COT-SIs at the same time), then the COT-SIs may collide with each other and may thus fail to be decoded. Some techniques and apparatuses described herein provide for the second UE and the third UE to use respective time offsets (described in connection with **FIGS. 7** **and** **8****)** for their LBT attempts, such that the COT-SIs do not collide. Thus, the reliability of COT sharing is improved, thereby increasing throughput and improving reliability.

As shown by reference number 610, the first UE may transmit, using groupcast signaling, a COT sharing request to the second UE and the third UE. The COT sharing request transmitted to the second UE may be associated with a first time offset, and the COT sharing request transmitted to the second UE may be associated with a second time offset. In some aspects, the time offset may indicate a length of time between an end of an LBT attempt of a UE (e.g., a second UE or a third UE) and a start of a COT associated with the LBT attempt of the UE, as described in more detail in connection with **FIG. 7****.** In some other aspects, a time offset may indicate a length of time between receiving a COT sharing request and a start of a COT associated with the COT sharing request, as described in more detail in connection with **FIG. 8****.** A UE (e.g., the second UE or the third UE) may be mandated to start Category 4 LBT no later than an indicated start point in accordance with the time offset.

In some aspects, a time offset may be selected from multiple configured time offsets. For example, a UE may be configured (e.g., pre-configured) with a set of offset values. The first UE may transmit, via SCI with the COT sharing request, an indication of a selected time offset from the set of offset values. For example, the SCI may indicate a respective selected time offset for each UE, of the group of UEs to which the COT sharing request is directed. Thus, the first UE can indicate different selected time offsets for different UEs. In some aspects, the time offset may be indicated dynamically. For example, an SCI may explicitly indicate a time offset (such as a number of microseconds between an end of an LBT attempt and a start of a COT associated with the LBT attempt, or a number of slots or mini-slots between a time that the time offset is received and a time at which a COT associated with the time offset is started). In some aspects, the time offset may be indicated in terms of slots, such as a number of slots between a time that the time offset is received and a time at which a COT associated with the time offset is started. In some aspects, the time offset may be indicated in terms of mini-slots (e.g., if the radio access technology can support mini-slots), such as a number of mini-slots between a time that the time offset is received and a time at which a COT associated with the time offset is started.

In some aspects, the first UE may determine the first time offset and the second time offset. For example, the first UE may assign a time offset such that a UE with a higher probability of a successful LBT attempt has an earlier starting point for an LBT attempt than a UE with a lower probability of a successful LBT attempt. In some examples, the time offset associated with the UE with the higher probability may have a larger number of microseconds between an end of an LBT attempt and a start of a COT associated with the LBT attempt, or a smaller number of slots or mini-slots between a time that the time offset is received and a time at which a COT associated with the time offset is started. In some aspects, the first UE may determine the probability of a successful LBT attempt. For example, UEs may exchange a channel occupancy (e.g., *channelOccupancy)* parameter to distinguish who has a higher probability of a successful LBT attempt. The channel occupancy parameter may indicate a percentage of samples for which a received signal strength (RSSI) was above a configured threshold.

As shown by reference numbers 620 and 630, the second UE and the third UE may perform respective LBT attempts. The second UE and the third UE may perform the respective LBT attempts in accordance with the first time offset and the second time offset, respectively. For example, the second UE may perform a first LBT attempt in accordance with the first time offset, and the second UE may perform a second LBT attempt in accordance with the second time offset.

As shown by reference number 640, in some aspects, one or more of the second UE or the third UE may provide a response based at least in part on the respective LBT attempts. In some aspects, the response may include a COT-SI, indicating that the second UE or the third UE's LBT attempt was successful. In some aspects, the response may include a negative response, indicating that the second UE or the third UE's LBT attempt was unsuccessful. In some aspects, the first UE may receive different responses from different UEs (e.g., a COT-SI from the second UE and a negative response from the third UE, etc.).

In some aspects, the first UE may receive multiple COT-SIs corresponding to non-overlapped bands. For example, the second UE may have a successful LBT attempt on a first band, associated with a first COT, and the third UE may have a successful LBT attempt on a second band associated with a second COT. In this case, the first UE may combine the first COT and the second COT. For example, if the first UE receives multiple positive responses concurrently (e.g., associated with the same slot boundary), then the first UE may determine a combined COT using resources (e.g., frequency resources and time resources) of both the first COT and the second COT.

**FIG. 7** is a diagram illustrating an example 700 of an implementation of a time offset. In example 700, the time offsets are defined in terms of microseconds, such as between an end of an LBT attempt and a start of a COT associated with the LBT attempt. In some aspects, the time offsets defined in example 700 may be shorter than a symbol (e.g., an orthogonal frequency division multiplexing (OFDM) symbol). Example 700 includes a first UE (shown as UE1, and which may be the UE 104), a second UE (shown as UE2, and which may be the UE 104), and a third UE (shown as UE3, and which may be the UE 104). In example 700, the first UE is a requesting UE (that requests COT sharing), and the second UE and the third UE may perform channel access based at least in part on a COT sharing request from the first UE.

Example 700 includes a first time offset 710 and a second time offset 720. The first time offset 710 and the second time offset 720 may be relative to a COT 730. The first time offset 710 has a zero value, so there is no gap between an end of an LBT attempt and a start of the COT 730. The second time offset 720 has a length of 18 microseconds, so there is an 18 microsecond gap between an end of the LBT attempt and the COT 730. In some aspects, the first time offset 710 and the second time offset 720 may be defined in terms of a number of *X* microsecond offsets, such as based at least in part on a parameter *L.* For example, the first time offset 710 is *L * X= 0* * 9 microseconds = 0 microseconds. As another example, the second time offset 720 is *L * X =* 2 * 9 microseconds = 18 microseconds.

In some aspects, a UE may fill a gap associated with the time offset with a cyclic prefix extension. For example, as shown by reference number 740, the UE may fill the 18 microsecond gap of the time offset 720 with a cyclic prefix extension (CPE) such that other UEs (e.g., the UE associated with the 0 microsecond second time offset 720) LBT attempts are unsuccessful. Thus, the UE with the longest time offset has priority for securing the channel, which reduces the likelihood of COT-SI collision and enables a UE with a higher probability of success for LBT attempts to be prioritized.

**FIG. 8** is a diagram illustrating an example 800 of another implementation of a time offset. In example 800, the time offsets may indicate a number of slots or mini-slots between a time that the time offset is received and a time at which a COT associated with the time offset is started. Example 800 includes a first UE (shown as UE1, and which may be the UE 104), a second UE (shown as UE2, and which may be the UE 104), a third UE (shown as UE3, and which may be the UE 104), and a fourth UE (shown as UE, and which may be the UE 104). In example 800, the first UE is a requesting UE (that requests COT sharing) and the second, third, and fourth UEs may perform channel access based at least in part on a COT sharing request from the first UE. The second, third, and fourth UEs may belong to a group of UEs to which the first UE transmit a COT sharing request using groupcast signaling.

As shown, the first UE may transmit a COT sharing request to the second UE, the third UE, and the fourth UE. As further shown, COT sharing request may indicate a respective time offset for each of the second UE, the third UE, and the fourth UE. A time offset, in example 800, may indicate a number of slots or mini-slots (or more generally, a length of time) between receiving a COT sharing request and an end of an LBT attempt. For example, the second UE provides a length of time t1 between receiving the COT sharing request and an end of the LBT attempt based at least in part on the COT sharing request indicating the length of time t1 for the second UE, as shown by reference number 810. Furthermore, the second UE's LBT attempt is successful (not shown). The third and fourth UEs may decode the second UE's COT-SI and may therefore cease an LBT attempt based at least in part on the second UE's LBT attempt being successful.

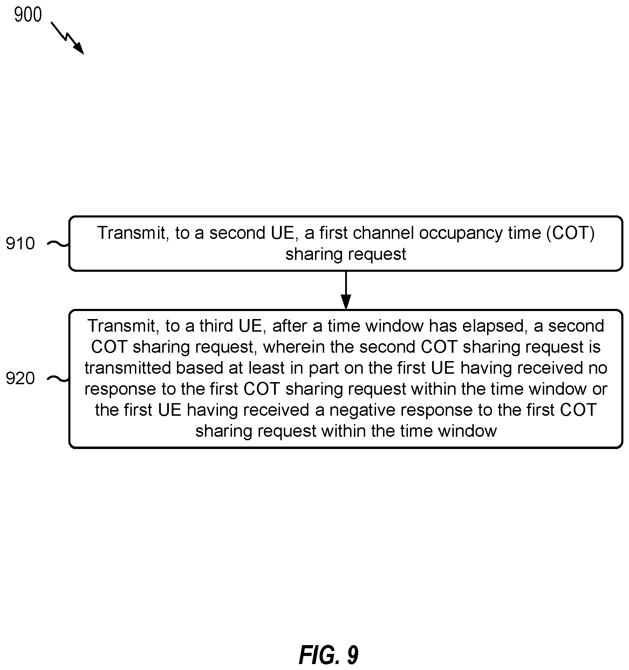

**FIG. 9** is a diagram illustrating an example process 900 performed, for example, by a UE. The example process 900 may be performed, for example, by the first UE of **FIGS. 4-5****.** As shown in **FIG. 9****,** in some aspects, process 900 may include transmitting, to a second UE, a first COT sharing request (block 910). In some aspects, process 900 may include transmitting, to a third UE, after a time window has elapsed, a second COT sharing request, wherein the second COT sharing request is transmitted based at least in part on the first UE having received no response to the first COT sharing request within the time window or the first UE having received a negative response to the first COT sharing request within the time window (block 920).

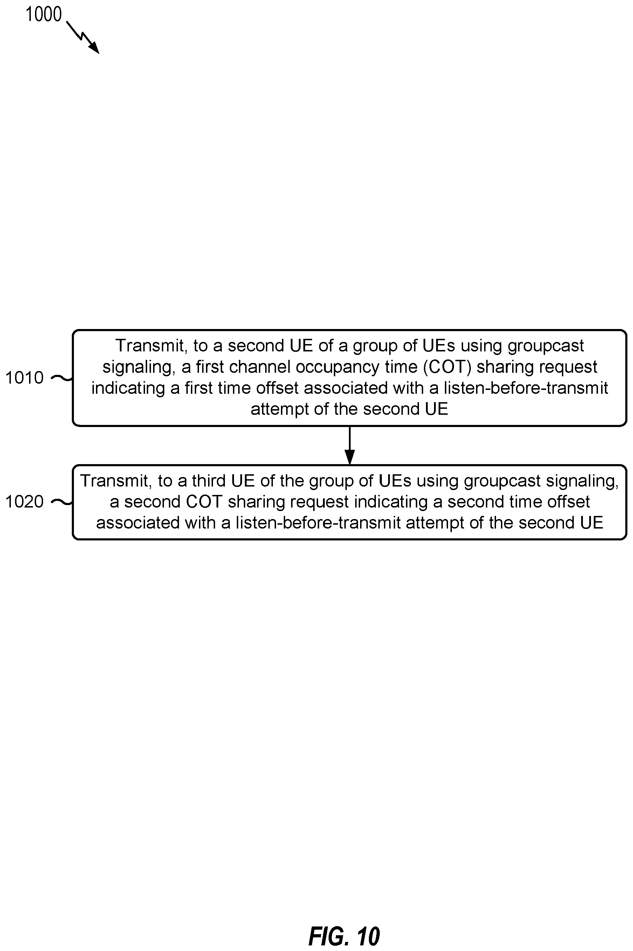

**FIG. 10** is a diagram illustrating an example process 1000 performed, for example, by a UE. The example process 1000 may be performed, for example, by the first UE of **FIGS. 6-8****.** As shown in **FIG. 10****,** in some aspects, process 1000 may include transmitting, to a second UE of a group of UEs using groupcast signaling, a first COT sharing request indicating a first time offset associated with a listen-before-transmit attempt of the second UE (block 1010). In some aspects, process 1000 may include transmitting, to a third UE of the group of UEs using groupcast signaling, a second COT sharing request indicating a second time offset associated with a listen-before-transmit attempt of the second UE (block 1020).

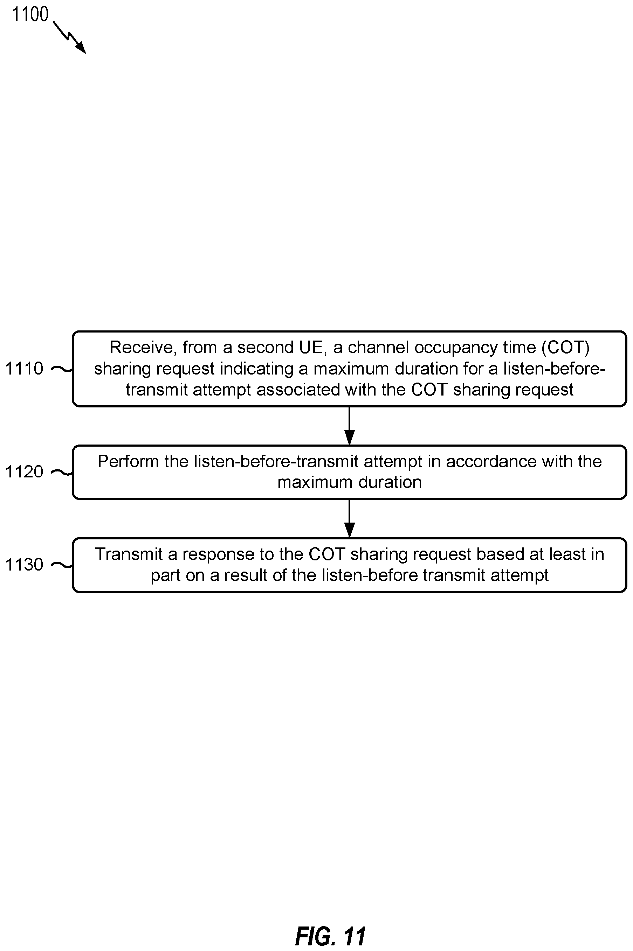

**FIG. 11** is a diagram illustrating an example process 1100 performed, for example, by a UE. The example process 1100 may be performed, for example, by the second UE or the third UE of **FIGS. 4-5****.** As shown in **FIG. 11****,** in some aspects, process 1100 may include receiving, from a second UE, a COT sharing request indicating a maximum duration for a listen-before-transmit attempt associated with the COT sharing request (block 1110). In some aspects, process 1100 may include performing the listen-before-transmit attempt in accordance with the maximum duration (block 1120). In some aspects, process 1100 may include transmitting a response to the COT sharing request based at least in part on a result of the listen-before transmit attempt (block 1130).

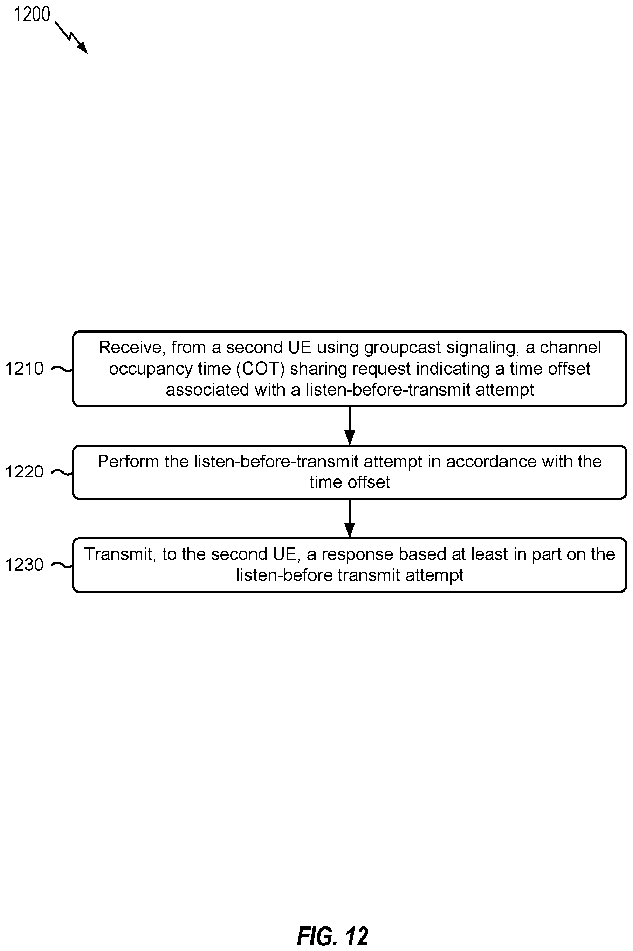

**FIG. 12** is a diagram illustrating an example process 1200 performed, for example, by a UE. The example process 1200 may be performed, for example, by the second UE, the third UE, or the fourth UE of **FIGS. 6-8****.** As shown in **FIG. 12****,** in some aspects, process 1200 may include receiving, from a second UE using groupcast signaling, a COT sharing request indicating a time offset associated with a listen-before-transmit attempt (block 1210). In some aspects, process 1200 may include performing the listen-before-transmit attempt in accordance with the time offset (block 1220). In some aspects, process 1200 may include transmitting, to the second UE, a response based at least in part on the listen-before transmit attempt (block 1230).

### Example Wireless Communication Devices

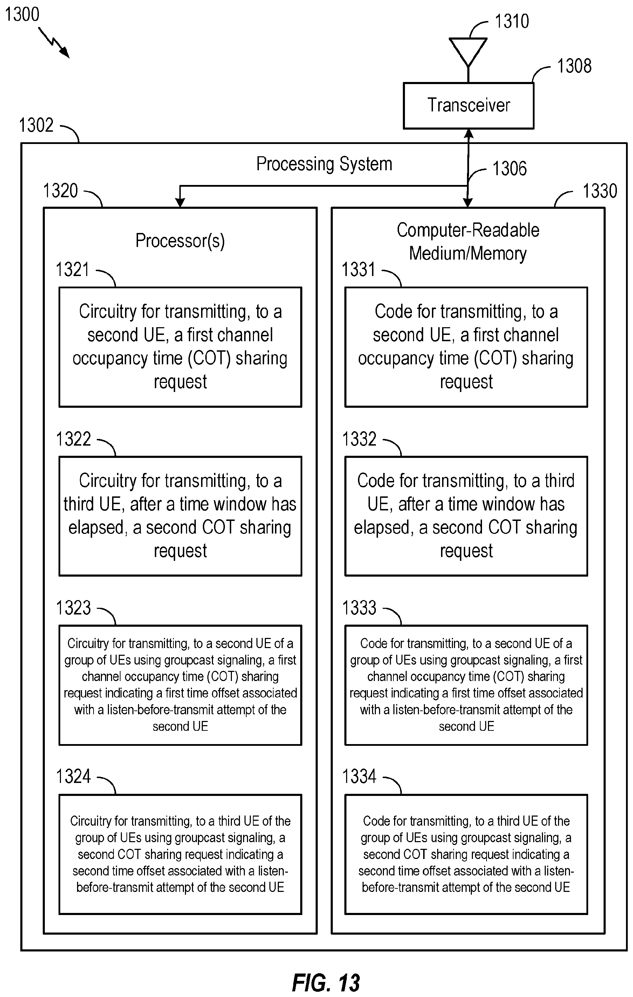

**FIG. 13** depicts an example communications device 1300 that includes various components operable, configured, or adapted to perform operations for the techniques disclosed herein, such as the operations depicted and described with respect to **FIGS. 4-10****.** In some examples, communication device 1300 may be a UE 104 as described, for example with respect to **FIGS. 1** and **2****.** For example, communication device 1300 may be a first UE as described with respect to **FIGS. 4-8****.**

Communications device 1300 includes a processing system 1302 coupled to a transceiver 1308 (e.g., a transmitter and/or a receiver). Transceiver 1308 is configured to transmit (or send) and receive signals for the communications device 1300 via an antenna 1310, such as the various signals as described herein. Processing system 1302 may be configured to perform processing functions for communications device 1300, including processing signals received and/or to be transmitted by communications device 1300.

Processing system 1302 includes one or more processors 1320 coupled to a computer-readable medium/memory 1330 via a bus 1306. In certain aspects, computer-readable medium/memory 1330 is configured to store instructions (e.g., computer-executable code) that when executed by the one or more processors 1320, cause the one or more processors 1320 to perform the operations illustrated in **FIGS. 4-10****,** or other operations for performing the various techniques discussed herein for configure UEs for COT sharing.

In the depicted example, computer-readable medium/memory 1330 stores code 1331 for transmitting, to a second UE, a first COT sharing request, code 1332 for transmitting, to a third UE, after a time window has elapsed, a second COT sharing request, wherein the second COT sharing request is transmitted based at least in part on the first UE having received no response to the first COT sharing request within the time window or the first UE having received a negative response to the first COT sharing request within the time window, code 1333 for transmitting, to a second UE of a group of UEs using groupcast signaling, a first COT sharing request indicating a first time offset associated with a listen-before-transmit attempt of the second UE, and code 1334 for transmitting, to a third UE of the group of UEs using groupcast signaling, a second COT sharing request indicating a second time offset associated with a listen-before-transmit attempt of the second UE.

In the depicted example, the one or more processors 1320 include circuitry configured to implement the code stored in the computer-readable medium/memory 1330, including circuitry 1321 for transmitting, to a second UE, a first COT sharing request, circuitry 1322 for transmitting, to a third UE, after a time window has elapsed, a second COT sharing request, wherein the second COT sharing request is transmitted based at least in part on the first UE having received no response to the first COT sharing request within the time window or the first UE having received a negative response to the first COT sharing request within the time window, circuitry 1323 for transmitting, to a second UE of a group of UEs using groupcast signaling, a first COT sharing request indicating a first time offset associated with a listen-before-transmit attempt of the second UE, and circuitry 1324 for transmitting, to a third UE of the group of UEs using groupcast signaling, a second COT sharing request indicating a second time offset associated with a listen-before-transmit attempt of the second UE.

Various components of communications device 1300 may provide means for performing the methods described herein, including with respect to **FIGS. 4-10****.**

In some examples, means for transmitting or sending (or means for outputting for transmission) may include the transceivers 254 and/or antenna(s) 252 of the UE 104 illustrated in **FIG. 2** and/or transceiver 1308 and antenna 1310 of the communication device 1300 in **FIG. 13****.**

In some examples, means for receiving (or means for obtaining) may include the transceivers 254 and/or antenna(s) 252 of the base station illustrated in **FIG. 2** and/or transceiver 1308 and antenna 1310 of the communication device 1300 in **FIG. 13****.**

In some examples, means for transmitting, to a second UE, a first COT sharing request, means for transmitting, to a third UE, after a time window has elapsed, a second COT sharing request, wherein the second COT sharing request is transmitted based at least in part on the first UE having received no response to the first COT sharing request within the time window or the first UE having received a negative response to the first COT sharing request within the time window, means for transmitting, to a second UE of a group of UEs using groupcast signaling, a first COT sharing request indicating a first time offset associated with a listen-before-transmit attempt of the second UE, and means for transmitting, to a third UE of the group of UEs using groupcast signaling, a second COT sharing request indicating a second time offset associated with a listen-before-transmit attempt of the second UE may include various processing system components, such as: the one or more processors 1320 in **FIG. 13****,** or aspects of the UE 104 depicted in **FIG. 2****,** including receive processor 258, transmit processor 264, TX MIMO processor 266, and/or controller/processor 280 (including communication manager 281).

Notably, **FIG. 13** is an example, and many other examples and configurations of communication device 1300 are possible.

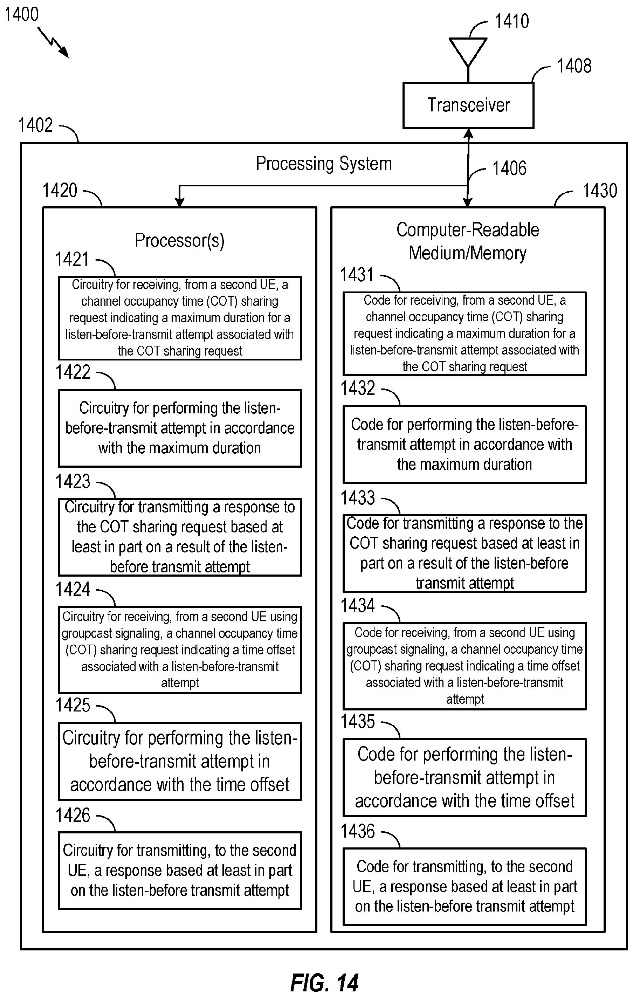

**FIG. 14** depicts an example communications device 1400 that includes various components operable, configured, or adapted to perform operations for the techniques disclosed herein, such as the operations depicted and described with respect to **FIGS. 4-8** and **11-12.** In some examples, communication device 1400 may be a user equipment 104 as described, for example with respect to **FIGS. 1** and **2****.**

Communications device 1400 includes a processing system 1402 coupled to a transceiver 1408 (e.g., a transmitter and/or a receiver). Transceiver 1408 is configured to transmit (or send) and receive signals for the communications device 1400 via an antenna 1410, such as the various signals as described herein. Processing system 1402 may be configured to perform processing functions for communications device 1400, including processing signals received and/or to be transmitted by communications device 1400.

Processing system 1402 includes one or more processors 1420 coupled to a computer-readable medium/memory 1430 via a bus 1406. In certain aspects, computer-readable medium/memory 1430 is configured to store instructions (e.g., computer-executable code) that when executed by the one or more processors 1420, cause the one or more processors 1420 to perform the operations illustrated in **FIGS. 4-8** and **11-12,** or other operations for performing the various techniques discussed herein for perform signaling associated with requesting COT sharing from multiple UEs.

In the depicted example, computer-readable medium/memory 1430 stores code 1431 for receiving, from a second UE, a COT sharing request indicating a maximum duration for a listen-before-transmit attempt associated with the COT sharing request, code 1432 for performing the listen-before-transmit attempt in accordance with the maximum duration, code 1433 for transmitting a response to the COT sharing request based at least in part on a result of the listen-before transmit attempt, code 1434 for receiving, from a second UE using groupcast signaling, a COT sharing request indicating a time offset associated with a listen-before-transmit attempt, code 1435 for performing the listen-before-transmit attempt in accordance with the time offset, and code 1436 for transmitting, to the second UE, a response based at least in part on the listen-before transmit attempt.

In the depicted example, the one or more processors 1420 include circuitry configured to implement the code stored in the computer-readable medium/memory 1430, including circuitry 1421 for receiving, from a second UE, a COT sharing request indicating a maximum duration for a listen-before-transmit attempt associated with the COT sharing request, circuitry 1422 for performing the listen-before-transmit attempt in accordance with the maximum duration, circuitry 1423 for transmitting a response to the COT sharing request based at least in part on a result of the listen-before transmit attempt, circuitry 1424 for receiving, from a second UE using groupcast signaling, a COT sharing request indicating a time offset associated with a listen-before-transmit attempt, circuitry 1425 for performing the listen-before-transmit attempt in accordance with the time offset, and circuitry 1426 for transmitting, to the second UE, a response based at least in part on the listen-before transmit attempt.

Various components of communications device 1400 may provide means for performing the methods described herein, including with respect to **FIGS. 3-8** and **10-11.**

In some examples, means for transmitting or sending (or means for outputting for transmission) may include the transceivers 254 and/or antenna(s) 252 of the user equipment 104 illustrated in **FIG. 2** and/or transceiver 1408 and antenna 1410 of the communication device 1400 in **FIG. 14****.**

In some examples, means for receiving (or means for obtaining) may include the transceivers 254 and/or antenna(s) 252 of the user equipment 104 illustrated in **FIG. 2** and/or transceiver 1408 and antenna 1410 of the communication device 1400 in **FIG. 14****.**

In some examples, means for receiving, from a second UE, a COT sharing request indicating a maximum duration for a listen-before-transmit attempt associated with the COT sharing request, means for performing the listen-before-transmit attempt in accordance with the maximum duration, means for transmitting a response to the COT sharing request based at least in part on a result of the listen-before transmit attempt, means for receiving, from a second UE using groupcast signaling, a COT sharing request indicating a time offset associated with a listen-before-transmit attempt, means for performing the listen-before-transmit attempt in accordance with the time offset, and means for transmitting, to the second UE, a response based at least in part on the listen-before transmit attempt may include various processing system components, such as: the one or more processors 1420 in **FIG. 14****,** or aspects of the user equipment 104 depicted in **FIG. 2****,** including receive processor 258, transmit processor 264, TX MIMO processor 266, and/or controller/processor 280 (including communication manager 281).

Notably, **FIG. 14** is an example, and many other examples and configurations of communication device 1400 are possible.

### Additional Wireless Communication Network Considerations

The techniques and methods described herein may be used for various wireless communications networks (or wireless wide area network (WWAN)) and radio access technologies (RATs). While aspects may be described herein using terminology commonly associated with 3G, 4G, and/or 5G (e.g., 5G new radio (NR)) wireless technologies, aspects of the present disclosure may likewise be applicable to other communication systems and standards not explicitly mentioned herein.

5G wireless communication networks may support various advanced wireless communication services, such as enhanced mobile broadband (eMBB), millimeter wave (mmWave), machine type communications (MTC), and/or mission critical targeting ultra-reliable, low-latency communications (URLLC). These services, and others, may include latency and reliability requirements.

Returning to **FIG. 1****,** various aspects of the present disclosure may be performed within the example wireless communication network 100.

In 3GPP, the term "cell" can refer to a coverage area of a NodeB and/or a narrowband subsystem serving this coverage area, depending on the context in which the term is used. In NR systems, the term "cell" and BS, next generation NodeB (gNB or gNodeB), access point (AP), distributed unit (DU), carrier, or transmission reception point may be used interchangeably. A BS may provide communication coverage for a macro cell, a pico cell, a femto cell, and/or other types of cells.

A macro cell may generally cover a relatively large geographic area (e.g., several kilometers in radius) and may allow unrestricted access by UEs with service subscription. A pico cell may cover a relatively small geographic area (e.g., a sports stadium) and may allow unrestricted access by UEs with service subscription. A femto cell may cover a relatively small geographic area (e.g., a home) and may allow restricted access by UEs having an association with the femto cell (e.g., UEs in a Closed Subscriber Group (CSG) and UEs for users in the home). A BS for a macro cell may be referred to as a macro BS. A BS for a pico cell may be referred to as a pico BS. A BS for a femto cell may be referred to as a femto BS, home BS, or a home NodeB.

Base stations 102 configured for 4G LTE (collectively referred to as Evolved Universal Mobile Telecommunications System (UMTS) Terrestrial Radio Access Network (E-UTRAN)) may interface with the EPC 160 through first backhaul links 132 (e.g., an S1 interface). Base stations 102 configured for 5G (e.g., 5G NR or Next Generation RAN (NG-RAN)) may interface with 5GC 190 through second backhaul links 184. Base stations 102 may communicate directly or indirectly (e.g., through the EPC 160 or 5GC 190) with each other over third backhaul links 134 (e.g., X2 interface). Third backhaul links 134 may generally be wired or wireless.

Small cell 102' may operate in a licensed and/or an unlicensed frequency spectrum. When operating in an unlicensed frequency spectrum, the small cell 102' may employ NR and use the same 5 GHz unlicensed frequency spectrum as used by the Wi-Fi AP 150. Small cell 102', employing NR in an unlicensed frequency spectrum, may boost coverage to and/or increase capacity of the access network.

Some base stations, such as gNB 180 may operate in a traditional sub-6 GHz spectrum, in millimeter wave (mmWave) frequencies, and/or near mmWave frequencies in communication with the UE 104. When the gNB 180 operates in mmWave or near mmWave frequencies, the gNB 180 may be referred to as an mmWave base station.

The communication links 120 between base stations 102 and, for example, UEs 104, may be through one or more carriers. For example, base stations 102 and UEs 104 may use spectrum up to *Y* MHz (e.g., 5, 10, 15, 20, 100, 400, and other MHz) bandwidth per carrier allocated in a carrier aggregation of up to a total of *Yx* MHz (x component carriers) used for transmission in each direction. The carriers may or may not be adjacent to each other. Allocation of carriers may be asymmetric with respect to DL and UL (e.g., more or fewer carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Wireless communications network 100 further includes a Wi-Fi access point (AP) 150 in communication with Wi-Fi stations (STAs) 152 via communication links 154 in, for example, a 2.4 GHz and/or 5 GHz unlicensed frequency spectrum. When communicating in an unlicensed frequency spectrum, the STAs 152 / AP 150 may perform a clear channel assessment (CCA) prior to communicating in order to determine whether the channel is available.

Certain UEs 104 may communicate with each other using device-to-device (D2D) communication link 158. The D2D communication link 158 may use the DL/UL WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, FlashLinQ, WiMedia, Bluetooth, ZigBee, Wi-Fi based on the IEEE 802.11 standard, 4G (e.g., LTE), or 5G (e.g., NR), to name a few options.

EPC 160 may include a Mobility Management Entity (MME) 162, other MMEs 164, a Serving Gateway 166, a Multimedia Broadcast Multicast Service (MBMS) Gateway 168, a Broadcast Multicast Service Center (BM-SC) 170, and a Packet Data Network (PDN) Gateway 172. MME 162 may be in communication with a Home Subscriber Server (HSS) 174. MME 162 is the control node that processes the signaling between the UEs 104 and the EPC 160. Generally, MME 162 provides bearer and connection management.

Generally, user Internet protocol (IP) packets are transferred through Serving Gateway 166, which itself is connected to PDN Gateway 172. PDN Gateway 172 provides UE IP address allocation as well as other functions. PDN Gateway 172 and the BM-SC 170 are connected to the IP Services 176, which may include, for example, the Internet, an intranet, an IP Multimedia Subsystem (IMS), a Packet Switched (PS) Streaming Service, and/or other IP services.

BM-SC 170 may provide functions for MBMS user service provisioning and delivery. BM-SC 170 may serve as an entry point for content provider MBMS transmission, may be used to authorize and initiate MBMS Bearer Services within a public land mobile network (PLMN), and may be used to schedule MBMS transmissions. MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

5GC 190 may include an Access and Mobility Management Function (AMF) 192, other AMFs 193, a Session Management Function (SMF) 194, and a User Plane Function (UPF) 195. AMF 192 may be in communication with a Unified Data Management (UDM) 196.

AMF 192 is generally the control node that processes the signaling between UEs 104 and 5GC 190. Generally, AMF 192 provides QoS flow and session management.

All user Internet protocol (IP) packets are transferred through UPF 195, which is connected to the IP Services 197, and which provides UE IP address allocation as well as other functions for 5GC 190. IP Services 197 may include, for example, the Internet, an intranet, an IP Multimedia Subsystem (IMS), a PS Streaming Service, and/or other IP services.

Returning to **FIG. 2****,** various example components of BS 102 and UE 104 (e.g., the wireless communication network 100 of **FIG. 1****)** are depicted, which may be used to implement aspects of the present disclosure.

At BS 102, a transmit processor 220 may receive data from a data source 212 and control information from a controller/processor 240. The control information may be for the physical broadcast channel (PBCH), physical control format indicator channel (PCFICH), physical HARQ indicator channel (PHICH), physical downlink control channel (PDCCH), group common PDCCH (GC PDCCH), and others. The data may be for the physical downlink shared channel (PDSCH), in some examples.

A medium access control (MAC)-control element (MAC-CE) is a MAC layer communication structure that may be used for control command exchange between wireless nodes. The MAC-CE may be carried in a shared channel such as a physical downlink shared channel (PDSCH), a physical uplink shared channel (PUSCH), or a physical sidelink shared channel (PSSCH).

Processor 220 may process (e.g., encode and symbol map) the data and control information to obtain data symbols and control symbols, respectively. Transmit processor 220 may also generate reference symbols, such as for the primary synchronization signal (PSS), secondary synchronization signal (SSS), PBCH demodulation reference signal (DMRS), and channel state information reference signal (CSI-RS).

Transmit (TX) multiple-input multiple-output (MIMO) processor 230 may perform spatial processing (e.g., precoding) on the data symbols, the control symbols, and/or the reference symbols, if applicable, and may provide output symbol streams to the modulators (MODs) in transceivers 232a-232t. Each modulator in transceivers 232a-232t may process a respective output symbol stream (e.g., for OFDM) to obtain an output sample stream. Each modulator may further process (e.g., convert to analog, amplify, filter, and upconvert) the output sample stream to obtain a downlink signal. Downlink signals from the modulators in transceivers 232a-232t may be transmitted via the antennas 234a-234t, respectively.

At UE 104, antennas 252a-252r may receive the downlink signals from the BS 102 and may provide received signals to the demodulators (DEMODs) in transceivers 254a-254r, respectively. Each demodulator in transceivers 254a-254r may condition (e.g., filter, amplify, downconvert, and digitize) a respective received signal to obtain input samples. Each demodulator may further process the input samples (e.g., for OFDM) to obtain received symbols.

MIMO detector 256 may obtain received symbols from all the demodulators in transceivers 254a-254r, perform MIMO detection on the received symbols if applicable, and provide detected symbols. Receive processor 258 may process (e.g., demodulate, deinterleave, and decode) the detected symbols, provide decoded data for the UE 104 to a data sink 260, and provide decoded control information to a controller/processor 280.

On the uplink, at UE 104, transmit processor 264 may receive and process data (e.g., for the PUSCH) from a data source 262 and control information (e.g., for the physical uplink control channel (PUCCH)) from the controller/processor 280. Transmit processor 264 may also generate reference symbols for a reference signal (e.g., for the sounding reference signal (SRS)). The symbols from the transmit processor 264 may be precoded by a TX MIMO processor 266 if applicable, further processed by the modulators in transceivers 254a-254r (e.g., for SC-FDM), and transmitted to BS 102.

At BS 102, the uplink signals from UE 104 may be received by antennas 234at, processed by the demodulators in transceivers 232a-232t, detected by a MIMO detector 236 if applicable, and further processed by a receive processor 238 to obtain decoded data and control information sent by UE 104. Receive processor 238 may provide the decoded data to a data sink 239 and the decoded control information to the controller/processor 240.

Memories 242 and 282 may store data and program codes for BS 102 and UE 104, respectively.

Scheduler 244 may schedule UEs for data transmission on the downlink and/or uplink.

5G may utilize orthogonal frequency division multiplexing (OFDM) with a cyclic prefix (CP) on the uplink and downlink. 5G may also support half-duplex operation using time division duplexing (TDD). OFDM and single-carrier frequency division multiplexing (SC-FDM) partition the system bandwidth into multiple orthogonal subcarriers, which are also commonly referred to as tones and bins. Each subcarrier may be modulated with data. Modulation symbols may be sent in the frequency domain with OFDM and in the time domain with SC-FDM. The spacing between adjacent subcarriers may be fixed, and the total number of subcarriers may be dependent on the system bandwidth. The minimum resource allocation, called a resource block (RB), may be 12 consecutive subcarriers in some examples. The system bandwidth may also be partitioned into subbands. For example, a subband may cover multiple RBs. NR may support a base subcarrier spacing (SCS) of 15 KHz and other SCS may be defined with respect to the base SCS (e.g., 30 kHz, 60 kHz, 120 kHz, 240 kHz, and others).

As above, **FIGS. 3A-3D** depict various example aspects of data structures for a wireless communication network, such as wireless communication network 100 of **FIG. 1****.**

In various aspects, the 5G frame structure may be frequency division duplex (FDD), in which for a particular set of subcarriers (carrier system bandwidth), subframes within the set of subcarriers are dedicated for either DL or UL. 5G frame structures may also be time division duplex (TDD), in which for a particular set of subcarriers (carrier system bandwidth), subframes within the set of subcarriers are dedicated for both DL and UL. In the examples provided by **FIGS. 3A** and **3C****,** the 5G frame structure is assumed to be TDD, with subframe 4 being configured with slot format 28 (with mostly DL), where D is DL, U is UL, and X is flexible for use between DL/UL, and subframe 3 being configured with slot format 34 (with mostly UL). While subframes 3, 4 are shown with slot formats 34, 28, respectively, any particular subframe may be configured with any of the various available slot formats 0-61. Slot formats 0, 1 are all DL, UL, respectively. Other slot formats 2-61 include a mix of DL, UL, and flexible symbols. UEs are configured with the slot format (dynamically through DL control information (DCI), or semi-statically/statically through radio resource control (RRC) signaling) through a received slot format indicator (SFI). Note that the description below applies also to a 5G frame structure that is TDD.

Other wireless communication technologies may have a different frame structure and/or different channels. A frame (10 ms) may be divided into 10 equally sized subframes (1 ms). Each subframe may include one or more time slots. Subframes may also include mini-slots, which may include 7, 4, or 2 symbols. In some examples, each slot may include 7 or 14 symbols, depending on the slot configuration.

For example, for slot configuration 0, each slot may include 14 symbols, and for slot configuration 1, each slot may include 7 symbols. The symbols on DL may be cyclic prefix (CP) OFDM (CP-OFDM) symbols. The symbols on UL may be CP-OFDM symbols (for high throughput scenarios) or discrete Fourier transform (DFT) spread OFDM (DFT-s-OFDM) symbols (also referred to as single carrier frequency-division multiple access (SC-FDMA) symbols) (for power limited scenarios; limited to a single stream transmission).

The number of slots within a subframe is based on the slot configuration and the numerology. For slot configuration 0, different numerologies (µ) 0 to 5 allow for 1, 2, 4, 8, 16, and 32 slots, respectively, per subframe. For slot configuration 1, different numerologies 0 to 2 allow for 2, 4, and 8 slots, respectively, per subframe. Accordingly, for slot configuration 0 and numerology µ, there are 14 symbols/slot and 2µ slots/subframe. The subcarrier spacing and symbol length/duration are a function of the numerology. The subcarrier spacing may be equal to 2^{µ} × 15 kHz, where µ is the numerology 0 to 5. As such, the numerology µ = 0 has a subcarrier spacing of 15 kHz and the numerology µ = 5 has a subcarrier spacing of 480 kHz. The symbol length/duration is inversely related to the subcarrier spacing. **FIGS. 3A-3D** provide an example of slot configuration 0 with 14 symbols per slot and numerology µ = 2 with 4 slots per subframe. The slot duration is 0.25 ms, the subcarrier spacing is 60 kHz, and the symbol duration is approximately 16.67 µs.

A resource grid may be used to represent the frame structure. Each time slot includes a resource block (RB) (also referred to as physical RBs (PRBs)) that extends 12 consecutive subcarriers. The resource grid is divided into multiple resource elements (REs). The number of bits carried by each RE depends on the modulation scheme.

As illustrated in **FIG. 3A****,** some of the REs carry reference (pilot) signals (RS) for a UE (e.g., UE 104 of **FIGS. 1** and **2****).** The RS may include demodulation RS (DM-RS) (indicated as Rx for one particular configuration, where 100x is the port number, but other DM-RS configurations are possible) and channel state information reference signals (CSI-RS) for channel estimation at the UE. The RS may also include beam measurement RS (BRS), beam refinement RS (BRRS), and phase tracking RS (PT-RS).

**FIG. 3B** illustrates an example of various DL channels within a subframe of a frame. The physical downlink control channel (PDCCH) carries DCI within one or more control channel elements (CCEs), each CCE including nine RE groups (REGs), each REG including four consecutive REs in an OFDM symbol.

A primary synchronization signal (PSS) may be within symbol 2 of particular subframes of a frame. The PSS is used by a UE (e.g., 104 of **FIGS. 1** and **2****)** to determine subframe/symbol timing and a physical layer identity.

A secondary synchronization signal (SSS) may be within symbol 4 of particular subframes of a frame. The SSS is used by a UE to determine a physical layer cell identity group number and radio frame timing.

Based on the physical layer identity and the physical layer cell identity group number, the UE can determine a physical cell identifier (PCI). Based on the PCI, the UE can determine the locations of the aforementioned DM-RS. The physical broadcast channel (PBCH), which carries a master information block (MIB), may be logically grouped with the PSS and SSS to form a synchronization signal (SS)/PBCH block. The MIB provides a number of RBs in the system bandwidth and a system frame number (SFN). The physical downlink shared channel (PDSCH) carries user data, broadcast system information not transmitted through the PBCH such as system information blocks (SIBs), and paging messages.

As illustrated in **FIG. 3C****,** some of the REs carry DM-RS (indicated as R for one particular configuration, but other DM-RS configurations are possible) for channel estimation at the base station. The UE may transmit DM-RS for the physical uplink control channel (PUCCH) and DM-RS for the PUSCH. The PUSCH DM-RS may be transmitted in the first one or two symbols of the PUSCH. The PUCCH DM-RS may be transmitted in different configurations depending on whether short or long PUCCHs are transmitted and depending on the particular PUCCH format used. The UE may transmit sounding reference signals (SRS). The SRS may be transmitted in the last symbol of a subframe. The SRS may have a comb structure, and a UE may transmit SRS on one of the combs. The SRS may be used by a base station for channel quality estimation to enable frequency-dependent scheduling on the UL.

**FIG. 3D** illustrates an example of various UL channels within a subframe of a frame. The PUCCH may be located as indicated in one configuration. The PUCCH carries uplink control information (UCI), such as scheduling requests, a channel quality indicator (CQI), a precoding matrix indicator (PMI), a rank indicator (RI), and HARQ ACK/NACK feedback. The PUSCH carries data, and may additionally be used to carry a buffer status report (BSR), a power headroom report (PHR), and/or UCI.

### Additional Considerations

The preceding description provides examples of signaling of COT sharing request to multiple UEs in communication systems. The preceding description is provided to enable any person skilled in the art to practice the various aspects described herein. The examples discussed herein are not limiting of the scope, applicability, or aspects set forth in the claims. Various modifications to these aspects will be readily apparent to those skilled in the art, and the generic principles defined herein may be applied to other aspects. For example, changes may be made in the function and arrangement of elements discussed without departing from the scope of the disclosure as defined by the appended claims.

The techniques described herein may be used for various wireless communication technologies, such as 5G (e.g., 5G NR), 3GPP Long Term Evolution (LTE), LTE-Advanced (LTE-A), code division multiple access (CDMA), time division multiple access (TDMA), frequency division multiple access (FDMA), orthogonal frequency division multiple access (OFDMA), single-carrier frequency division multiple access (SC-FDMA), time division synchronous code division multiple access (TD-SCDMA), and other networks. The terms "network" and "system" are often used interchangeably. A CDMA network may implement a radio technology such as Universal Terrestrial Radio Access (UTRA), cdma2000, and others. UTRA includes Wideband CDMA (WCDMA) and other variants of CDMA. cdma2000 covers IS-2000, IS-95 and IS-856 standards. A TDMA network may implement a radio technology such as Global System for Mobile Communications (GSM). An OFDMA network may implement a radio technology such as NR (e.g. 5G radio access), Evolved UTRA (E-UTRA), Ultra Mobile Broadband (UMB), IEEE 802.11 (Wi-Fi), IEEE 802.16 (WiMAX), IEEE 802.20, Flash-OFDMA, and others. UTRA and E-UTRA are part of Universal Mobile Telecommunication System (UMTS). LTE and LTE-A are releases of UMTS that use E-UTRA. UTRA, E-UTRA, UMTS, LTE, LTE-A and GSM are described in documents from an organization named "3rd Generation Partnership Project" (3GPP). cdma2000 and UMB are described in documents from an organization named "3rd Generation Partnership Project 2" (3GPP2). NR is an emerging wireless communications technology under development.

The various illustrative logical blocks, modules and circuits described in connection with the present disclosure may be implemented or performed with a general purpose processor, a digital signal processor, an ASIC, a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a digital signal processor (DSP) and a microprocessor, a plurality of microprocessors, one or more microprocessors in conjunction with a DSP core, a system on a chip (SoC), or any other such configuration.

If implemented in hardware, an example hardware configuration may comprise a processing system in a wireless node. The processing system may be implemented with a bus architecture. The bus may include any number of interconnecting buses and bridges depending on the specific application of the processing system and the overall design constraints. The bus may link together various circuits including a processor, machine-readable media, and a bus interface. The bus interface may be used to connect a network adapter, among other things, to the processing system via the bus. The network adapter may be used to implement the signal processing functions of the physical layer. In the case of a user equipment (see **FIG. 1****),** a user interface (e.g., keypad, display, mouse, joystick, touchscreen, biometric sensor, proximity sensor, light emitting element, and others) may also be connected to the bus. The bus may also link various other circuits such as timing sources, peripherals, voltage regulators, power management circuits, and the like, which are well known in the art, and therefore, will not be described any further. The processor may be implemented with one or more general-purpose and/or special-purpose processors. Examples include microprocessors, microcontrollers, DSP processors, and other circuitry that can execute software. Those skilled in the art will recognize how best to implement the described functionality for the processing system depending on the particular application and the overall design constraints imposed on the overall system.

If implemented in software, the functions may be stored or transmitted over as one or more instructions or code on a computer readable medium. Software shall be construed broadly to mean instructions, data, or any combination thereof, whether referred to as software, firmware, middleware, microcode, hardware description language, or otherwise. Computer-readable media include both computer storage media and communication media including any medium that facilitates transfer of a computer program from one place to another. The processor may be responsible for managing the bus and general processing, including the execution of software modules stored on the machine-readable storage media. A computer-readable storage medium may be coupled to a processor such that the processor can read information from, and write information to, the storage medium. In the alternative, the storage medium may be integral to the processor. By way of example, the machine-readable media may include a transmission line, a carrier wave modulated by data, and/or a computer readable storage medium with instructions stored thereon separate from the wireless node, all of which may be accessed by the processor through the bus interface. Alternatively, or in addition, the machine-readable media, or any portion thereof, may be integrated into the processor, such as the case may be with cache and/or general register files. Examples of machine-readable storage media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product.

A software module may comprise a single instruction, or many instructions, and may be distributed over several different code segments, among different programs, and across multiple storage media. The computer-readable media may comprise a number of software modules. The software modules include instructions that, when executed by an apparatus such as a processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module below, it will be understood that such functionality is implemented by the processor when executing instructions from that software module.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

## Claims

1. A method (900) of wireless communication performed by a first user equipment, UE, comprising:
transmitting (910), to a second UE, a first channel occupancy time, COT, sharing request; and **characterized by** further comprising:
transmitting (920), to a third UE, after a time window has elapsed, a second COT sharing request, wherein the second COT sharing request is transmitted based at least in part on the first UE having received no response to the first COT sharing request within the time window or the first UE having received a negative response to the first COT sharing request within the time window.

2. The method of claim 1, further comprising receiving configuration information indicating the time window.

3. The method of claim 1, further comprising transmitting information indicating a maximum duration for a listen-before-transmit attempt associated with the first COT sharing request.

4. The method of claim 3, wherein the information indicating the maximum duration is transmitted in a radio resource control message.

5. The method of claim 3, wherein the information indicating the maximum duration is transmitted in the first COT sharing request.

6. The method of claim 1, wherein the negative response is associated with a one-shot listen-before-transmit attempt.

7. The method of claim 1, wherein the negative response is associated with a listen-before-transmit attempt with random back-off and a variable contention window.

8. The method of claim 1, wherein the negative response is received from a base station.

9. The method of claim 1, wherein the negative response is received via a cell in licensed spectrum.

10. The method of claim 1, wherein the negative response is received via short control signaling.

11. A method (1000) of wireless communication performed by a first user equipment, UE, comprising:
transmitting (1010), to a second UE of a group of UEs using groupcast signaling, a first channel occupancy time, COT, sharing request indicating a first time offset associated with a listen-before-transmit attempt of the second UE; and
transmitting (1020), to a third UE of the group of UEs using groupcast signaling, a second COT sharing request indicating a second time offset associated with a listen-before-transmit attempt of the second UE.

12. The method of claim 11, wherein the first time offset is indicated, from multiple configured time offsets, by sidelink control information associated with the COT sharing request.

13. The method of claim 11, wherein the first time offset indicates a length of time between an end of the listen-before-transmit attempt of the second UE and a start of a COT associated with the listen-before-transmit attempt of the second UE.

14. An apparatus comprising means for performing a method in accordance with any one of claims 1 to 13.

15. A non-transitory computer-readable medium comprising executable instructions that, when executed by one or more processors of an apparatus, cause the apparatus to perform a method in accordance with any one of methods 1 to 13.

## Patentansprüche

1. Ein Verfahren (900) für eine drahtlose Kommunikation, das durch ein erstes Benutzergerät (User Equipment bzw. UE) durchgeführt wird, aufweisend:
Senden (910), an ein zweites UE, einer ersten Kanalbelegungszeit (Channel Occupancy Time bzw. COT)-Teilungsanfrage, und
das Verfahren **dadurch gekennzeichnet ist, dass** es weiterhin aufweist:
Senden (920), an ein drittes UE und nach Ablauf eines Zeitfensters, einer zweiten COT-Teilungsanfrage, wobei die zweite COT-Teilungsanfrage basierend wenigstens teilweise darauf gesendet wird, dass das erste UE keine Antwort auf die erste COT-Teilungsanfrage innerhalb des Zeitfensters empfangen hat oder das erste UE eine negative Antwort auf die erste COT-Teilungsanfrage innerhalb des Zeitfensters empfangen hat.

2. Verfahren nach Anspruch 1, das weiterhin das Empfangen von Konfigurationsinformationen, die das Zeitfenster angeben, aufweist.

3. Verfahren nach Anspruch 1, das weiterhin das Senden von Informationen, die eine maximale Zeitdauer für einen mit der ersten COT-Teilungsanfrage assoziierten Listen-before-Transmit-Versuch angeben, aufweist.

4. Verfahren nach Anspruch 3, wobei die Informationen, die die maximale Zeitdauer angeben, in einer Funkressourcensteuerung (Radio Resource Control bzw. RRC)-Nachricht gesendet werden.

5. Verfahren nach Anspruch 3, wobei die Informationen, die die maximale Zeitdauer angeben, in der ersten COT-Teilungsanfrage gesendet werden.

6. Verfahren nach Anspruch 1, wobei die negative Antwort mit einem einmaligen Listen-before-Transmit-Versuch assoziiert ist.

7. Verfahren nach Anspruch 1, wobei die negative Antwort mit einem Listen-before-Transmit-Versuch mit einem zufälligen Backoff und einem variablen Wettbewerbsfenster assoziiert ist.

8. Verfahren nach Anspruch 1, wobei die negative Antwort von einer Basisstation empfangen wird.

9. Verfahren nach Anspruch 1, wobei die negative Antwort über eine Zelle in einem lizenzierten Spektrum empfangen wird.

10. Verfahren nach Anspruch 1, wobei die negative Antwort über eine kurze Steuersignalisierung empfangen wird.

11. Ein Verfahren (1000) für eine drahtlose Kommunikation, das durch ein erstes Benutzergerät (User Equipment bzw. UE) durchgeführt wird, aufweisend:
Senden (1010), an ein zweites UE aus einer Gruppe von UEs, die eine Groupcast-Signalisierung verwenden, einer ersten Kanalbelegungszeit (Channel Occupancy Time bzw. COT)-Teilungsanfrage, die einen ersten Zeitversatz, der mit einem Listen-before-Transmit-Versuch des zweiten UE assoziiert ist, angibt, und
Senden (1020), an ein drittes UE aus der Gruppe von UEs unter Verwendung einer Groupcast-Signalisierung, einer zweiten COT-Teilungsanfrage, die einen zweiten Zeitversatz, der mit einem Listen-before-Transmit-Versuch des zweiten UE assoziiert ist, angibt.

12. Verfahren nach Anspruch 11, wobei der erste Zeitversatz aus mehreren konfigurierten Zeitversätzen durch mit der COT-Teilungsanfrage assoziierte Sidelink-Steuerinformationen angegeben wird.

13. Verfahren nach Anspruch 11, wobei der erste Zeitversatz eine Zeitlänge zwischen einem Ende des Listen-before-Transmit-Versuchs des zweiten UE und einem Anfang einer mit dem Listen-before-Transmit-Versuch des zweiten UE assoziierten COT angibt.

14. Eine Vorrichtung, die Mittel zum Durchführen eines Verfahrens gemäß einem der Ansprüche 1 bis 13 aufweist.

15. Ein nicht-transitorisches, computerlesbares Medium, das ausführbare Befehle aufweist, die bei einer Ausführung durch einen oder mehrere Prozessoren einer Vorrichtung die Vorrichtung zum Durchführen des Verfahrens gemäß einem der Ansprüche 1 bis 13 veranlassen.

## Revendications

1. Procédé (900) de communication sans fil mis en œuvre par un premier équipement d'utilisateur, UE, comprenant :
la transmission (910), à un deuxième UE, d'une première demande de partage de temps d'occupation de canal, COT, et **caractérisé en ce qu'**il comprend en outre :
la transmission (920), à un troisième UE, après l'écoulement d'une fenêtre temporelle, d'une deuxième demande de partage de COT, la deuxième demande de partage de COT étant transmise sur la base, au moins en partie, du fait que le premier UE n'a reçu aucune réponse à la première demande de partage de COT dans la fenêtre temporelle ou que le premier UE a reçu une réponse négative à la première demande de partage de COT dans la fenêtre temporelle.

2. Procédé selon la revendication 1, comprenant en outre la réception d'informations de configuration indiquant la fenêtre temporelle.

3. Procédé selon la revendication 1, comprenant en outre la transmission d'informations indiquant une durée maximale pour une tentative d'écoute de la porteuse avant transmission associée à la première demande de partage de COT.

4. Procédé selon la revendication 3, dans lequel les informations indiquant la durée maximale sont transmises dans un message de commande des ressources radio.

5. Procédé selon la revendication 3, dans lequel les informations indiquant la durée maximale sont transmises dans la première demande de partage de COT.

6. Procédé selon la revendication 1, dans lequel la réponse négative est associée à une tentative unique d'écoute de la porteuse avant transmission.

7. Procédé selon la revendication 1, dans lequel la réponse négative est associée à une tentative d'écoute de la porteuse avant transmission avec temporisation aléatoire et fenêtre de contention variable.

8. Procédé selon la revendication 1, dans lequel la réponse négative est reçue d'une station de base.

9. Procédé selon la revendication 1, dans lequel la réponse négative est reçue via une cellule dans le spectre sous licence.

10. Procédé selon la revendication 1, dans lequel la réponse négative est reçue via une signalisation de commande courte.

11. Procédé (1000) de communication sans fil mis en œuvre par un premier équipement d'utilisateur, UE, comprenant :
la transmission (1010), à un deuxième UE d'un groupe d'UE à l'aide d'une signalisation de diffusion de groupe, d'une première demande de partage de temps d'occupation de canal, COT, indiquant un premier décalage temporel associé à une tentative d'écoute de la porteuse avant transmission du deuxième UE ; et
la transmission (1020), à un troisième UE du groupe d'UE à l'aide d'une signalisation de diffusion de groupe, d'une deuxième demande de partage de COT indiquant un deuxième décalage temporel associé à une tentative d'écoute de la porteuse avant transmission du deuxième UE.

12. Procédé selon la revendication 11, dans lequel le premier décalage temporel est indiqué, parmi plusieurs décalages temporels configurés, par des informations de commande de liaison latérale associées à la demande de partage de COT.

13. Procédé selon la revendication 11, dans lequel le premier décalage temporel indique une durée entre la fin de la tentative d'écoute de la porteuse avant transmission du deuxième UE et le début d'une COT associée à la tentative d'écoute de la porteuse avant transmission du deuxième UE.

14. Un appareil comprenant des moyens pour mettre en œuvre un procédé selon l'une quelconque des revendications 1 à 13.

15. Support non transitoire lisible par ordinateur comprenant des instructions exécutables qui, lorsqu'elles sont exécutées par un ou plusieurs processeurs d'un appareil, amènent l'appareil à mettre en œuvre un procédé conforme à l'une quelconque des revendications 1 à 13.
